# EUROPEAN PATENT SPECIFICATION

(11) **EP 0 929 174 B1**
(45) Date of publication and mention of the grant of the patent: **24.10.2007**
(21) Application number: 99100441.7
(22) Date of filing: 11.01.1999
(51) Int. Cl.: H04M 9/08

(54) **Voice switching system capable of improving a quality of conversation**
Sprachvermittlungssystem mit verbesserter Konversationsqualität
Système commutateur amélioré à commande vocale

(30) Priority: 09.01.1998 JP 1512298
(43) Date of publication of application: 14.07.1999
(73) Proprietor: NEC CORPORATION, Tokyo (JP)
(72) Inventor: Ono, Yoshihiro c/o, Minato-ku, Tokyo (JP)
(74) Representative: Vossius & Partner

(56) References cited:
- EP-A- 0 330 384
- EP-A- 0 781 029
- EP-A- 0 808 052
- EP-A- 0 813 331
- US-A- 5 696 821
- PATENT ABSTRACTS OF JAPAN vol. 0183, no. 29 (E-1566), 22 June 1994 (1994-06-22) & JP 06 078046 A (FUJITSU LTD), 18 March 1994 (1994-03-18)

## Description

This invention relates to a voice switching system for use in a teleconference system, a hand-free telephone system, and the like.

An example of such a voice switching system used conventionally in an electronic conference system is exemplified, as a first prior art, in JP-A-1-245661. The publication paper discloses a howling suppression device which compares a transmission signal level with a reception signal level so as to detect whether or not a difference between both levels exceeds a predetermined value. When the difference exceeds the predetermined value, the howling suppression device either the transmission signal or the reception signal which is detected to be lower in level. On the other hand, the howling suppression device prevents an echo canceller from amending an estimated Impulse response, when the transmission signal level is detected to be higher than the reception signal level.

Another example of such a conventional voice switching system is exemplified, as a second prior art, in JP-A-6-253001. The publication paper discloses a voice control circuit which prevents a voice system of a teleconference system from an erroneous operation due to a change of a transmitting input level dependent on an amount of echo suppression by an echo canceller. For this purpose, in the voice control circuit, from an aforehead section of an echo canceller, an input level of a transmission signal is detected by a transmitting input level detector while a reception signal level is detected by a receiving input level detector. A detection output of the transmitting input level detector is then compared with that of the receiving input level detector by the use of a comparator. Dependent on a result of the comparison, an amount of attenuation by a transmission signal attenuator or a reception signal attenuator is adjusted in the voice control circuit disclosed in the publication paper.

Still another example of such a conventional voice switching system is exemplified, as a third prior art, in JP-A-4-22249. The publication paper discloses a loudspeaking telephone system which controlls an amount of attenuation of a variable attenuator only by voices through a line in which an echo is cancelled. Namely, in the loudspeaking telephone system, an output of a microphone is attenuated by a primary variable attenuator, and then, an output of the primary variable attenuator is sent to a line. A voice received through the line is attenuated by a secondary variable attenuator to be supplied to a speaker. Thus, an amount of attenuation of the primary and the secondary variable attenuators are controlled by the received voice of which an echo is cancelled in the line.

However, all of a first, a second or a third prior art disclosed in each of the above-mentioned publication papers are such techniques as suppressing howling. As will later be described more in detail, an unmatch of timing is inevitably caused to occur between a signal to be attenuated and a reference signal for determining an amount of attenuation, when a certain delay exists in either the signal to be attenuated or the reference signal. As a result, an attenuation is inserted within a conversation at an unappropriate timing to deteriorate a quality of the conversation.

EP-A-0 813 331 discloses a voice switching system according to the preamble of claim 1.

It is therefore an object of the present invention to provide a voice switching system which is capable of an appropriate switching to improve a quality of a conversation.

Other objects of the present invention will become clear as the description proceeds.

The objects are achieved with the features of the claims.
Fig. 1 is a block diagram for showing a conventional voice switching system;
Fig. 2 is a block diagram for showing a voice switching system according to a first embodiment of the present invention;
Fig. 3 is a block diagram for shoving a reception side control section of the voice switching system illustrated in Fig. 2;
Fig. 4 is a characteristic diagram for showing a relation between a specific amount of attenuation of a reception voice power and that of a transmission voice power in an attenuation amount calculating section of the reception side control section illustrated in Fig. 3;
Fig. 5 is a block diagram for showing a transmission side control section of the voice switching system illustrated in Fig. 2:
Fig. 6 is a characteristic diagram for showing a relation between a specific amount of attenuation of a speaker output voice power and that of a microphone input voice power in the transmission side control section illustrated in Fig. 5;
Fig. 7 is a block diagram for showing a voice switching system according to a second embodiment of the present invention; and
Fig. 8 is a block diagram for partially showing an acoustic echo canceller and a transmission side control section of the voice switching system illustrated in Fig. 7.

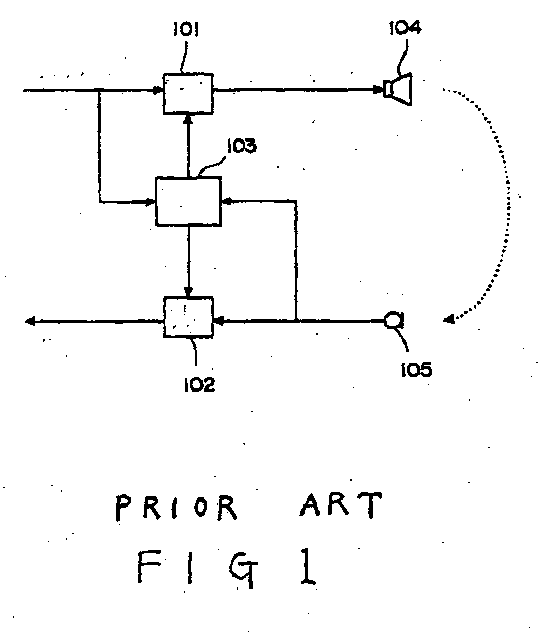

Referring to Fig. 1, description is, at first made about a conventional voice switch in order to facilitate an understanding of the present invention.

In Fig. 1, a receiving voice signal received from a side of a communication line is inputted into a receiving side attenuation section 101 and a control section 103. On the other hand, a microphone input voice signal gathered by a microphone 105 is inputted into the control section 103 and a transmitting side attenuation section 102. The control section 103 controlls an amount of attenuation in the receiving side attenuation section 101 and the transmitting side attenuation section 102. By this control, the receiving side attenuation section 101 attenuates the receiving voice signal to make a voice be generated from a speaker 104. The speaker 104 enlarges the receiving voice all over a room. On the other hand, the transmitting side attenuation section 102 attenuates the microphone input voice signal inputted from the microphone 105 to make a transmitting voice signal be outputted to the side of the communication line.

In Fig. 1, the control section 103 compares a level of the receiving voice signal with that of the microphone input voice signal inputted from the microphone 105. As a result of the comparison, the control section 103 controls the receiving side attenuation section 101 and the transmitting side attenuation section 102 so that either the receiving voice signal or the microphone input voice signal having a lower level may further be attenuated.

Herein, it is assumed that for example, a remote end speaker vocalizes, that the receiving voice signal is received, and that no voice signal is inputted into the microphone 105. The receiving voice signal is enlarged over the room by the speaker 104 through the receiving side attenuation section 101. The voice signal outputted from the speaker 104 turns to the microphone 105 to be again inputted thereinto. When a gain of sound coupling of the voice signal turning to the microphone 105 from the speaker 104 is smaller than a gain of the control section 103, it is determined in the control section 103 that an input level of the transmitting side is smaller than an input level of the receiving side. The control section 103 controls the transmitting side attenuation section 102 to make an amount of attenuation larger.

Next, it is also assumed that for example, a near end speaker vocalizes, that a voice signal is inputted into the microphone 105, and that no receiving voice signal is received. The microphone input voice signal is transmitted through the transmitting side attenuation section 102. The transmitting voice signal thus transmitted returns as the receiving voice signal through a sound coupling between the speaker 104 and the microphone 105 at the remote end side. When a gain of the sound coupling between the speaker 104 and the microphone 106 is smaller than a gain of the receiving side attenuation section 101, it is determined in the control section 103 that an input level of the receiving side is smaller than an input leave of the transmitting side. The control section 103 controls the receiving side attenuation section 101 to make an amount of attenuation larger.

However, in the conventional voice switch illustrated in Fig. 1, as mentioned in the preamble of the instant specification, an unmatch of timing is inevitably caused to occur between a signal to be attenuate and a reference signal to which the control section 103 refers for determining an amount of attenuation, when a certain delay exists in a communication line, for example, in a case that a processing of voice encoding is inserted therein. A certain delay is also generated while a voice outputted from a speaker turns to a microphone to become an input voice of the microphone, for example, in a case that a signal buffer is inserted preceding the speaker output or following the microphone input. In the case, the unmatch of timing is also caused to occur between the signal to be attenuated and the reference signal. An attenuation is inserted within a conversation at an unappropriate timing to deteriorate a quality of the conversation.

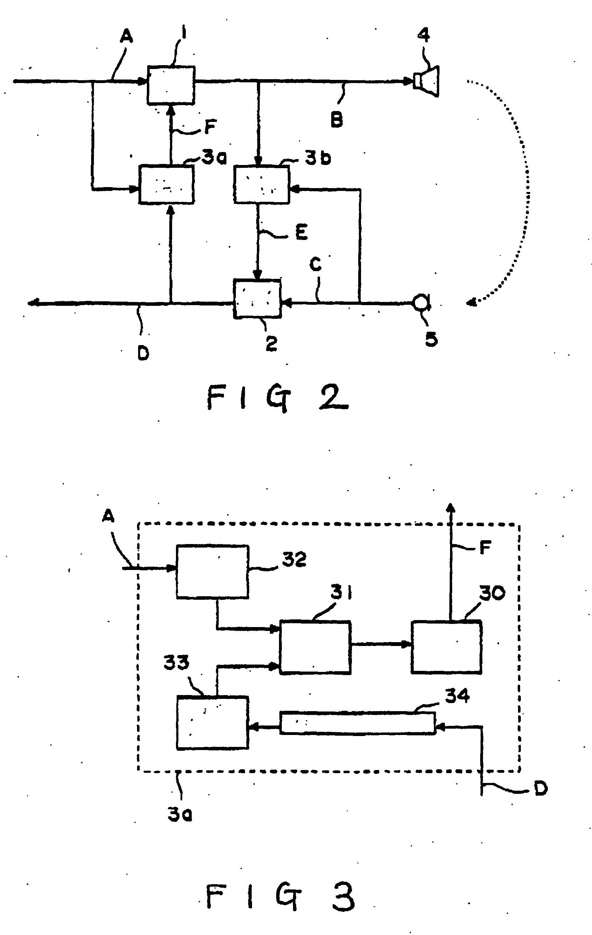

Now, referring to Figs. 2 through 6, description will proceed to a voice switch according to a first embodiment of the present invention.

Fig. 2 is a block diagram for showing a constitution of the voice switch according to the first embodiment.

In Fig. 2, a receiving voice signal A transmitted from an unillustrated communication line is inputted into a receiving side attenuation section 1 and a receiving side control section 3a. A transmitting voice signal D attenuated by a transmitting side attenuation section 2 is also inputted into the receiving side control section 3a. The transmitting voice signal D is transmitted to the unillustrated communication line.

Thus, the receiving voice signal A and the transmitting voice signal D being inputted, the receiving side control section 3a compares a level of the receiving voice signal A and that of the transmitting voice signal D to detect a difference therebetween. Dependent on the difference thus detected, the receiving side control section 3a controls an amount of attenuation in the receiving side attenuation section 1. The receiving side attenuation section 1 attenuates the receiving voice signal A to produce a speaker output voice signal B. The speaker output voice signal B is transmitted to a speaker 4 and a transmitting side control section 3b. On the other hand, a voice spreading from the speaker 4 and a voice signal produced by a near end speaker are gathered by a microphone 5 to produce a microphone input voice signal C. The microphone input voice signal C is inputted to the transmitting side attenuation section 2 and the transmitting side control section 3b. The transmitting side control section 3b compares a level of the microphone input voice signal C and that of the speaker output voice signal B to detect a difference therebetween. Dependent on the difference thus detected, the transmitting side control section 3b controls an amount of attenuation in the transmitting side attenuation section 2. The transmitting side attenuation section 2 produces the transmitting voice signal D. Attenuated by the transmitting side attenuation section 2, the transmitting voice signal D is transmitted to the unillustrated communication line.

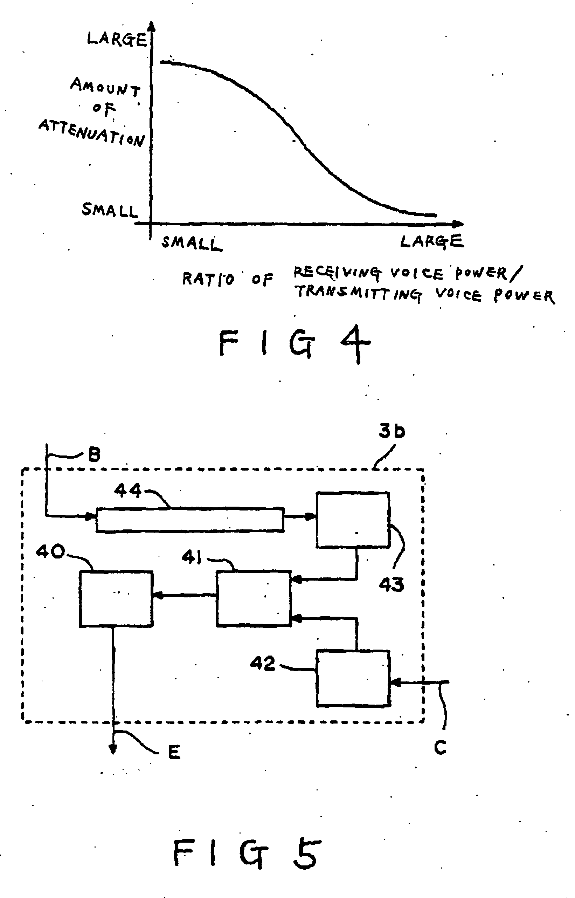

Next, referring to Figs. 3 and 4, detailed description is made about the receiving side control section 3a illustrated in Fig 2.

Fig. 3 is a block diagram for showing an internal constitution of the receiving side control section 3a.

In Fig. 3, the receiving voice signal A is inputted to a receiving side signal power estimation section 32. On the other hand, the transmitting voice signal D is inputted to a transmitting side signal delay buffer 34. An output of the transmitting side signal delay buffer 34 is inputted to a transmitting side signal power estimation section 33. An output of the receiving side signal power estimation section 32 and an output of the transmitting side signal power estimation section 33 are both inputted to a comparator 31 to be compared with each other. An output of the comparator 31 is inputted to an attenuation amount calculation section 30. The attenuation amount calculation section 30 outputs a receiving side attenuation amount F. The receiving side attenuation amount F is inputted to the receiving side attenuation section 1 illustrated in Fig. 2.

The receiving side signal power estimation section 32 estimates a voice signal power which is through the unillustrated communication line (lefthand side of Fig. 2) and which is produced by a remote end speaker. The receiving side signal power estimation section 32 outputs the estimated voice signal power to the comparator 31. The transmitting side signal power estimation section 33 estimates a voice signal power of the transmitting voice signal D which is delayed through the transmitting side signal delay buffer 34. The transmitting side signal power estimation section 33 outputs the estimated voice signal power to the comparator 31.

The comparator 31 compares the estimated voice signal power outputted from the receiving side signal power estimation section 32 with the estimated voice signal power outputted from the transmitting side signal power estimation section 33 to detect a ratio between the both estimated voice signal powers. The ratio thus detected is outputted to the attenuation amount calculation section 30. The attenuation amount calculation section 30 calculates and produces a receiving side attenuation amount based on the ratio of the both voice signal power inputted from the comparator 31.

A relation between the ratio and an output of the attenuation amount calculation section 30 is, for example, shown by a graph in Fig. 4. Fig. 4 shows the graph in which the ratio is depicted in a quadrature axis while the amount of attenuation is depicted in an axis of ordinates. As clearly shown in Fig. 4, the amount of attenuation becomes large when the ratio is small. On the contrary, the amount of attenuation becomes small when the ratio is large.

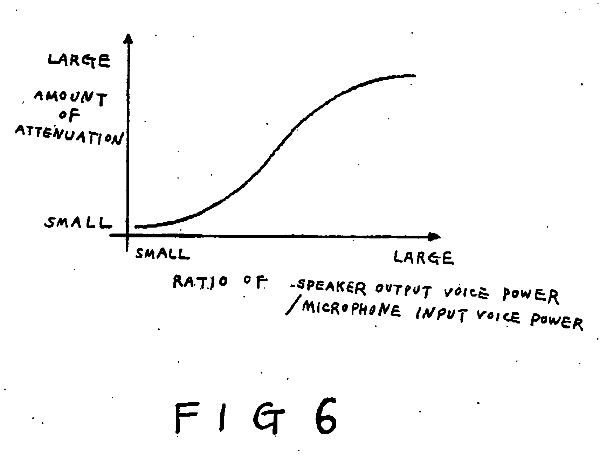

Further, referring to Figs. 5 and 6, detailed description is made as regards the transmitting side control section 3b illustrated in Fig 2.

Fig. 5 is a block diagram for showing an internal constitution of the transmitting side control section 3b.

In Fig. 5, the speaker output voice signal B outputted from the receiving side attenuation section 1 in Fig. 2 is inputted to a speaker output signal delay buffer 44. The speaker output signal delay buffer 44 delays the speaker output voice signal B to be outputted to a speaker output power estimation section 43. The speaker output power estimation section 43 estimates a power of the speaker output voice signal B delayed by the speaker output signal delay buffer 44. The estimated power is outputted from the speaker output power estimation section 43 to the comparator 41. On the other hand, a microphone input voice signal C inputted from the microphone 5 illustrated in Fig. 2 is inputted to the microphone input power estimation section 42. The microphone input power estimation section 42 estimates a voice signal power which is corresponding to the speaker 4 and the microphone 5 illustrated in Fig. 2 and which is produced by a near end speaker. The microphone input power estimation section 42 outputs the estimated voice signal power to the comparator 41. The comparator 41 compares the estimated voice signal power of the speaker output voice signal B outputted from the speaker output power estimation section 43 with the estimated voice signal power produced by the near end speaker outputted from the microphone input power estimation section 42 to detect a ratio between the both estimated voice signal power. The ratio thus detected is outputted to the attenuation amount calculation section 40. The attenuation amount calculation section 40 calculates and produces a transmitting side attenuation amount based on the ratio of the both voice signal power inputted from the comparator 41. The transmitting side attenuation amount is outputted to the transmitting side attenuation section 2 illustrated in Fig. 2.

A relation between the ratio and an output of the attenuation amount calculation section 40 is, for example, shown by a graph in Fig. 6. Fig. 6 shows the graph in which the ratio is depicted in a quadrature axis while the amount of attenuation is depicted in an axis of ordinates. As clearly shown in Fig. 6, the amount of attenuation becomes small when the ratio is small. On the contrary, the amount of attenuation becomes large when the ratio is large.

With reference to Figs. 2, 3 and 5 continued, description is made as regards an operation of the voice switch according to the first embodiment of the present invention. First, a control of the receiving side attenuation section 1 is hereinunder described. Herein, it is assumed that the microphone input voice signal C gathered by the microphone 5 and outputted therefrom exists, and that the receiving voice signal A transmitted through the communication line does not exist, namely is silent. In this time, the microphone input voice signal C is inputted to the transmitting side control section 3b and the transmitting side attenuation section 2. Since the speaker output voice signal B is not inputted to the transmitting side control section 3b from the receiving side attenuation section 1, the transmitting side control section 3b outputs a small amount of transmitting side attenuation to the transmitting side attenuation section 2. As a result, the transmitting side attenuation section 2 scarcely attenuates any microphone input voice signal C but outputs the transmitting voice signal D to the communication line as a transmission signal. The transmitting voice signal D outputted to the communication line is subjected to a sound coupling with an unillustrated speaker and an unillustrated microphone at the remote end side. The transmitting voice signal D is returned as the receiving voice signal A through the communication line. In this case, it takes about several hundreds of milliseconds for the transmitting voice signal D to be returned as the receiving voice signal A through the communication line.

This returned receiving voice signal A is inputted to the receiving side attenuation section 1 and the receiving side control section 3a. In the receiving side control section 3a illustrated in Fig. 3, the receiving voice signal A is inputted to a receiving side signal power estimation section 32. The receiving side signal power estimation section 32 estimates a signal power of the receiving voice signal A. Thus estimated signal power of the receiving voice signal A is outputted to the comparator 31. On the other hand, the transmitting voice signal D outputted from the transmitting side attenuation section 2 in Fig. 2 is inputted to the transmitting side signal delay buffer 34 of the receiving side control section 3a to be delayed therein. The delayed transmitting voice signal D is thereafter outputted to the transmitting side signal power estimation section 33. The transmitting side signal power estimation section 33 estimates a signal power of the transmitting voice signal D. The estimated signal power of the transmitting voice signal D is outputted to the comparator 31.

Accordingly, the comparator 31 compares a signal power of the receiving voice signal A and that of the transmitting voice signal D. In this comparison by the comparator 31, the delayed amount of the transmitting voice signal D by the transmitting side signal delay buffer 34 is adjusted to be equal to a delayed amount due to the communication line. In other words, the delayed amount of the transmitting voice signal D by the transmitting side signal delay buffer 34 is adjusted to be equal to the delayed amount (In this example, several hundreds of milliseconds, as mentioned above) which is generated until the transmitting voice signal is subjected to sound coupling by the speaker and the microphone with a voice produced by a remote end speaker through the communication line and again returned as the receiving voice signal A through the communication line. When a gain of the sound coupling does not exceed "1", the comparator 31 outputs such a signal as increasing an amount of attenuation to the attenuation amount calculation section 30. The attenuation amount calculation section 30 outputs a large amount of receiving side attenuation F based on the output by the comparator 31, namely, based on a ratio between both the signal powers of the receiving voice signal A and the transmitting voice signal D. The large amount of receiving side attenuation F is outputted to the receiving side attenuation section 1 in Fig. 2. Therefore, the speaker output voice signal B outputted from the receiving side attenuation section 1 is never outputted as the receiving voice signal A which is corresponding to the transmitting voice signal D returned through the communication line. As a result, any voice of the receiving voice signal A is not outputted from the speaker 4.

Next, a control of the transmitting side attenuation section 2 is hereinunder described. Herein, it is assumed that the receiving voice signal A is inputted to the receiving side control section 3a through the communication line in Fig. 2, and that the microphone input voice signal C inputted through the microphone 5 is silent. In this case, the receiving side control section 3a requests a small amount of attenuation to the receiving side attenuation section 1. Consequently, any receiving voice signal A is scarcely attenuated by the receiving side attenuation section 1 and is outputted therefrom to the speaker 4 and the transmitting side control section 3b as the speaker output voice signal B. The speaker output voice signal B supplied to the speaker 4 from the receiving side attenuation section 1 drives the speaker 4 to produce a voice. Through a sound coupling between the speaker 4 and the microphone 5, the voice turns from the speaker 4 to the microphone 5 as depicted by a dotted line in Fig. 2 to be a microphone input. From the production of the voice to the sound coupling by which the voice is gathered with the microphone 5, delay is inevitably caused to occur. On the other hand, the speaker output voice signal B is inputted to the transmitting side control section 3b illustrated in Fig. 5. The speaker output voice signal B is therein delayed by the speaker output signal delay buffer 44 to be inputted to the speaker output power estimation section 43. An amount of delay by the speaker output signal delay buffer 44 is adjusted to be equal to a delay time which is generated until the speaker output voice signal B is outputted from the speaker 4 as a voice and is gathered by the microphone 5 to be outputted as the microphone input voice signal C with a sound coupling between the speaker and the microphone.

After being delayed by the speaker output signal delay buffer 44, the speaker output voice signal B is inputted to the speaker output power estimation section 43, as mentioned above. Therein, a signal power of the speaker output voice signal B is estimated. As a result, the estimated signal power of the speaker output voice signal B is inputted to the comparator 41. On the other hand, the microphone input voice signal C outputted from the microphone 5 is inputted to the microphone input power estimation section 42. Therein, a signal power of the microphone input voice signal C is estimated. As a result, the estimated signal power of the microphone input voice signal C is inputted to the comparator 41. Accordingly, the comparator 41 compares the estimated signal power of the speaker output voice signal B with the estimated signal power of the microphone input voice signal C.

In this comparison by the comparator 41, when a gain of the sound coupling between the speaker 4 and the microphone 5 does not exceed "1", the comparator 41 outputs such a signal as increasing an amount of attenuation to the attenuation amount calculation section 40. Based on the result of the comparison by the comparator 41, the attenuation amount calculation section 40 calculates a transmitting side attenuation amount E to be outputted to the transmitting side attenuation section 2. Accordingly, the transmitting side attenuation section 2 largely attenuates the microphone input voice signal C with reference to the transmitting side attenuation amount E. Therefore, even if a voice outputted from the speaker 4 turn to the microphone 5 and is gathered thereby, the voice is largely attenuated by the transmitting side attenuation section 2. As a result, the microphone input voice signal C is never included in the transmitting voice signal D. Thus, in the voice switch according to the first embodiment, even if delay is generated in a communication line or delay is generated until a voice outputted from the speaker 4 turns to the microphone 5 to become a microphone input, the receiving side control section 3a and the transmitting side control section 3b are capable of adequate switching operations, respectively. Accordingly, a quality of conversation is so improved.

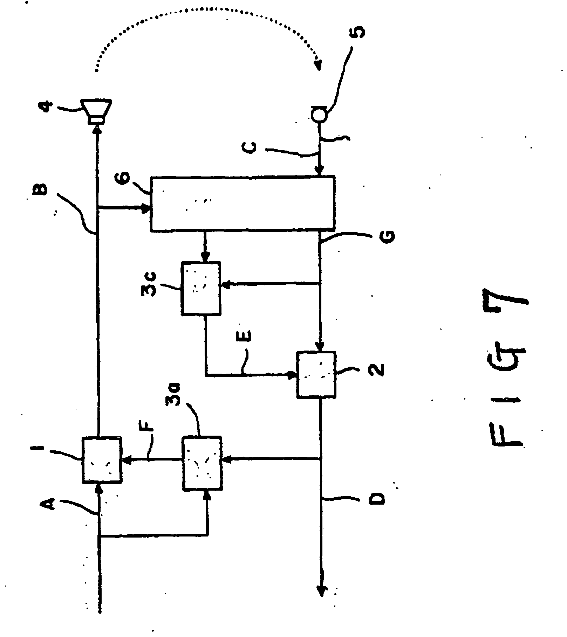

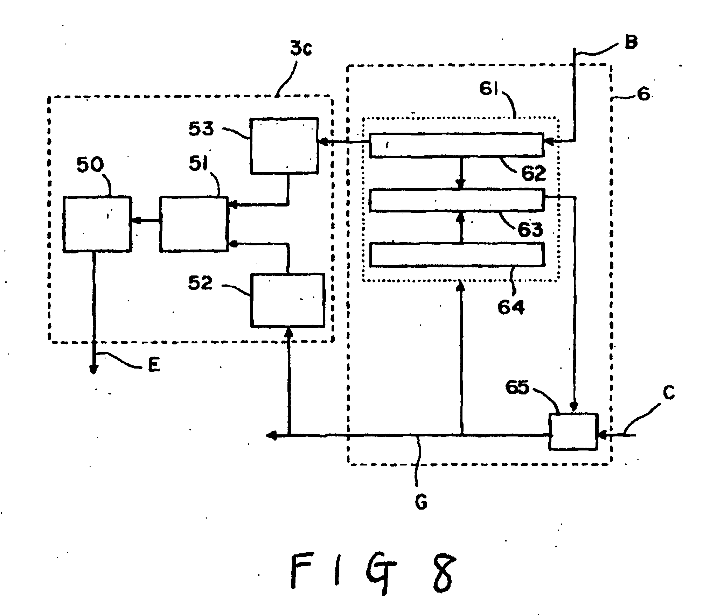

Referring to Figs. 7 and 8, description will proceed to a voice switch according to a second embodiment of the present invention.

Fig. 7 is a block diagram for showing a constitution of the voice switch according to the second embodiment.

As illustrated in Fig. 7, the voice switch according to the second embodiment has a structure similar to that of the first embodiment. Similar portions are designated by like reference numerals.

As will be clearly understood by comparing Fig. 7 with Fig. 2, a reference numeral 3c different from that of Fig. 2 is attached to a transmitting side control section in Fig. 7. Moreover, an acoustic echo canceller 6 is further provided in addition to the constitution of Fig. 2. A control of the transmitting side control section 3c is related to the acoustic echo canceller 6.

Namely, the speaker output voice signal B outputted from the receiving side attenuation section 1 is not only outputted to the speaker 4 but also inputted to the transmitting side control section 3c through the acoustic echo canceller 6. On the other hand, the microphone input voice signal C outputted from the microphone 5 is also inputted to the acoustic echo canceller 6 to be outputted therefrom as a residual echo signal G. The residual echo signal G is supplied to both the transmitting side attenuation section 2 and the transmitting side control section 3c. Other portions are similar to those of the first embodiment illustrated in Fig. 2.

Referring to Fig. 8 with reference to Fig. 7 continued, description is made as regards the acoustic echo canceller 6 and the transmitting side control section 3c. Fig. 8 is a block diagram for showing internal constitutions of the acoustic echo canceller 6 and the transmitting side control section 3c.

As illustrated in Fig. 8, the transmitting side control section 3c comprises an attenuation amount calculation section 50, a comparator 51, a residual echo power estimation section 52, and a speaker output power estimation section 53. On the other hand, the acoustic echo canceller 6 comprises an adaptive filter 61 and a subtractor 65. The adaptive filter 61 comprises an adaptive filter tap input buffer 62, sum of products operator 63 and an adaptive filter coefficient buffer 64. The above-mentioned microphone input voice signal C outputted from the microphone 5 is inputted to the subtractor 65. Further, an output of the sum of products operator 63 is also inputted to the subtractor 65.

As shown in Fig. 8, the residual echo signal G is outputted not only to the residual echo power estimation section 52 in the transmitting side control section 3c but also to the adaptive filter 61 in the acoustic echo canceller 6. The speaker output voice signal B outputted from the transmitting side attenuation section 1 illustrated in Fig. 7 is inputted to the adaptive filter tap input buffer 62. An output of the adaptive filter tap input buffer 62 is inputted to the speaker output power estimation section 53.

The adaptive filter 61 sequentially renews an adaptive filter coefficient stored in the adaptive filter coefficient buffer 64 by the use of the residual echo signal G and a value of the adaptive filter tap input buffer 62. The sum of products between the adaptive filter coeffieient of the adaptive filter factor buffer 64 and the value of the adaptive filter tap input buffer 62 is calculated in the sum of products operator 63. A result of the calculation is outputted to the subtractor 65. The subtractor 65 subtracts the result of the calculation in the sum of products operator 63 from the microphone input voice signal C to produce the residual echo signal G. The speaker output power estimation section 53 estimates a signal power of the speaker output voice signal B. The estimated signal power of the speaker output voice signal B is outputted to the comparator 51. The residual echo signal G is inputted to the residual echo power estimation section 52 in the transmitting side control section 3c. The comparator 51 compares a signal power of the speaker output voice signal B with a signal power of a voice of a near end speaker outputted from the residual echo power estimation section 52 to detect a ratio therebetween. The ratio is outputted from the comparator 51 to the attenuation amount calculation section 50. The attenuation amount calculation section 50 calculates and decides an amount of transmitting side attenuation based on the ratio inputted from the comparator 51. The amount of transmitting side attenuation is outputted to the transmitting side attenuation section 2 in Fig. 7.

In the second embodiment, the adaptive filter tap input buffer 62 in Fig. 8 functions similarly to the speaker output signal delay buffer 44 in the first embodiment. Accordingly, the speaker output signal delay buffer 44 in the first embodiment can be replaced with the adaptive filter tap input buffer 62. With this structure, in which the voice switch of the present invention is used together with the acoustic echo canceller 6, the speaker output signal delay buffer required for delaying the speaker output voice signal can be omitted. Further, with reference to a result of study of factors in the adaptive filter 61, an amount of delay of the speaker output voice signal B can be controlled.

As described above, according to the present invention, a level of the speaker output voice signal and a level of the microphone input voice signal are compared with each other in the transmitting side control section. Dependent on a difference between the both levels, the level of the microphone input voice signal is attenuated to obtain the transmitting voice signal. Further, a level 1 of the receiving voice signal and a level of the transmitting voice signal are compared with each other in the receiving side control section. Dependent on a difference between the both levels, the level of the receiving voice signal is attenuated to obtain the speaker output voice signal. Therefore, even if a delay is generated until a voice outputted from the speaker turns to the microphone to become the microphone input voice signal, or even if a delay exists in the side of a communication line, switching operations can be carried out adequately. Accordingly, a quality of conversation can be further improved.

While the present invention has thus far been described in conjunction with only a preferred embodiment thereof, it will now be readily possible for one skilled in the art to put the present invention into effect in various other manners.

## Claims

1. A voice switching system comprising :
transmitting side attenuation means (2) for attenuating a microphone input voice signal (C) having a first level to produce a transmitting voice signal(D) having a second level;
receiving side attenuation means (1) for attenuating a receiving voice signal (A) having a third level to produce a speaker output voice signal (B) having a fourth level;
transmitting side control means (3b) for comparing said first level of said microphone input voice signal (C) with said fourth level of said speaker output voice signal (B) to obtain a primary difference therebetween, said transmitting side control means (3b) being adapted to control, dependent on said primary difference, an amount of attenuation of said microphone input voice signal (C) in said transmitting side attenuation means (2); and
receiving side control means (3a) for comparing said second level of said transmitting voice signal (D) with said third level of said receiving voice signal (A) to obtain a secondary difference therebetween, said receiving side control means (3a) being adapted to control, dependent on said secondary difference, an amount of attenuation of said receiving voice signal (A) in said receiving side attenuation means (1),
**characterized in that** said receiving side control means (3a) further comprises:
a transmitting side signal delay buffer (34) for providing said transmitting voice signal (D) with a delay time, said delay time corresponding to a time for which said transmitting voice signal (D) returns as said receiving voice signal (A) through a communication line;
a transmitting side signal power estimation section (33) for estimating a signal power of said transmitting voice signal (D) outputted from said transmitting side signal delay buffer (34);
a receiving side signal power estimation section (32) for estimating a signal power of said receiving voice signal (A);
a first comparator (31) for comparing a primary estimated signal power of said transmitting voice signal (D) estimated by said transmitting side signal power estimation section (33) with a secondary estimated signal power of said receiving voice signal (A) estimated by said receiving side signal power estimation section (32) to obtain a ratio therebetween; and
a first attenuation amount calculation means (30) for calculating an amount of attenuation in said receiving side attenuation means (1) based on said ratio outputted from said first comparator (31),
and **in that** said transmitting side control means (3b) further comprises:
a microphone input power estimation section (42) for estimating a signal power of said microphone input voice signal (C);
a speaker output signal delay buffer (44) for providing said speaker output voice signal (B) with a delay time, said delay time corresponding to a time for which a voice outputted from said speaker (4) becomes said microphone input voice signal (c) by an acoustic coupling with said microphone (5);
a first speaker output power estimation section (43) for estimating a signal power of said speaker output voice signal (B) outputted from said speaker output signal delay buffer (44);
a second comparator (41) for comparing an estimated signal power of said microphone input voice signal (C) estimated by said microphone input power estimation section (42) with an estimated signal power of said speaker output voice signal (B) estimated by said first speaker output power estimation section (43) to obtain a ratio therebetween; and
a second attenuation amount calculation means (40) for calculating an amount of attenuation in said transmitting side attenuation means (2) based on said ratio outputted from said second comparator (41)

2. A voice switching system as claimed in claim 1, **characterized in that** said receiving voice signal (A) inputted to said receiving side signal power estimation section (32) is silent at the initial time when said transmitting voice signal (D) is inputted to said transmitting side signal delay buffer (34).

3. A voice switching system as claimed in claim 1 or 2, **characterized in that** said microphone input voice signal (C) inputted to said microphone input power estimation section (42) is silent at the initial time when said speaker output voice signal (B) is inputted to said speaker output signal delay buffer (44).

4. A system as claimed in claim 1, 2, or 3, **characterized in that** said transmitting side control means 3b) further comprises:
a residual echo power estimation section (52) for estimating a signal power of a residual echo signal (G) obtained by said microphone input voice signal (C) passing through an acoustic echo canceller (6);
a second speaker output power estimation section (53) for estimating a signal power of said speaker output voice signal (B) passing through said acoustic echo canceller (6);
a third comparator (51) for comparing an estimated signal power of said residual echo signal (G) estimated by said residual echo power estimation section (52) with an estimated signal power of said speaker output voice signal (B) estimated by said second speaker output power estimation section (53) to obtain a ratio therebetween; and
a third attenuation amount calculation means (50) for calculating an amount of attenuation in said transmitting side attenuation means (2) based on said ratio outputted from said third comparator (51).

5. A voice switching system as claimed in claim 4, **characterized in that** said acoustic echo canceller (6) is adapted to sequentially renew an adaptive filter coefficient stored in an adaptive filter coefficient buffer (64) by the use of said residual echo signal (G) and a value of an adaptive filter tap input buffer (62), said residual echo signal (G) being outputted from a subtractor (65) to which said microphone input voice signal (C) is inputted, and that a sum of products between said adaptive filter coefficient of said adaptive filter coefficient buffer (64) and said value of said adaptive filter tap input buffer (62) is calculated in a sum of products operator (63), a result of the calculation being subtracted by said subtractor (65) from said microphone input voice signal (C), thereby said residual echo signal (G) being outputted.

## Patentansprüche

1. Sprachvermittlungssystem mit:
einer sendeseitigen Abschwächungseinrichtung (2) zum Abschwächen eines Mikrofoneingangssprachsignals (C) mit einem ersten Pegel, um ein Sendesprachsignal (D) mit einem zweiten Pegel zu erzeugen;
einer empfangsseitigen Abschwächungseinrichtung (1) zum Abschwächen eines Empfangssprachsignals (A) mit einem dritten Pegel, um ein Lautsprecherausgangssignal (B) mit einem vierten Pegel zu erzeugen;
einer sendeseitigen Steuereinrichtung (3b) zum Vergleichen des ersten Pegels des Mikrofoneingangssprachsignals (C) mit dem vierten Pegel des Lautsprecherausgangssprachsignals (B), um eine primäre Differenz dazwischen zu erhalten, wobei die sendeseitige Steuereinrichtung (3b) dazu geeignet ist, einen Abschwächungsgrad des Mikrofoneingangssprachsignals (C) in der sendeseitigen Abschwächungseinrichtung (2) in Abhängigkeit von der primären Differenz zu steuern; und
einer empfangsseitigen Steuereinrichtung (3a) zum Vergleichen des zweiten Pegels des Sendesprachsignals (D) mit dem dritten Pegel des Empfangssprachsignals (A), um eine sekundäre Differenz dazwischen zu erhalten, wobei die empfangsseitige Steuereinrichtung (3a) dazu geeignet ist, einen Abschwächungsgrad des Empfangssprachsignals (A) in der empfangsseitigen Abschwächungseinrichtung (1) in Abhängigkeit von der sekundären Differenz zu steuern;
**dadurch gekennzeichnet, dass**
die empfangsseitige Steuereinrichtung (3a) ferner aufweist:
einen sendeseitigen Signalverzögerungspuffer (34) zum Bereitstellen einer Verzögerungszeit für das Sendesprachsignals (D), wobei die Verzögerungszeit einer Zeit entspricht, in der das Sendesprachsignal (D) über eine Kommunikationsleitung zurückübertragen und als das Empfangssprachsignal (A) empfangen wird;
einen sendeseitigen Signalleistungsschätzabschnitt (33) zum Schätzen einer Signalleistung des vom sendeseitigen Signalverzögerungspuffer (34) ausgegebenen Sendesprachsignals;
einen empfangsseitigen Signalleistungsschätzabschnitt (32) zum Schätzen einer Signalleistung des Empfangssprachsignals (A);
einen ersten Vergleicher (31) zum Vergleichen einer durch den sendeseitigen Signalleistungsschätzabschnitt (33) geschätzten primären geschätzten Signalleistung des Sendesprachsignals (D) mit einer durch den empfangsseitigen Signalleistungsschätzabschnitt (32) geschätzten sekundären geschätzten Signalleistung des Empfangssprachsignals (A), um ein Verhältnis dazwischen zu erhalten; und
eine erste Abschwächungsgradberechnungseinrichtung (30) zum Berechnen eines Abschwächungsgrades in der empfangsseitigen Abschwächungseinrichtung (1) basierend auf dem vom ersten Vergleicher (31) ausgegebenen Verhältnis;
und dass
die sendeseitige Steuereinrichtung (3b) ferner aufweist:
einen Mikrofoneingangssignalleistungsschätzabschnitt (42) zum Schätzen einer Signalleistung des Mikrofoneingangssprachsignals (C);
einen Lautsprecherausgangssignalverzögerungspuffer (44) zum Bereitstellen einer Verzögerungszeit für das Lautsprecherausgangssprachsignal (B), wobei die Verzögerungszeit einer Zeit entspricht, in der ein vom Lautsprecher (4) ausgegebenes Sprachsignal durch eine akustische Kopplung mit dem Mikrofon (5) als Mikrofoneingangssprachsignal (C) empfangen wird;
einen ersten Lautsprecherausgangssignalleistungsschätzabschnitt (43) zum Schätzen einer Signalleistung des vom Lautsprecherausgangssignalverzögerungspuffer (44) ausgegebenen Lautsprecherausgangssprachsignals (B) ;
einen zweiten Vergleicher (41) zum Vergleichen einer durch den Mikrofoneingangssignalleistungsschätzabschnitt (42) geschätzten Signalleistung des Mikrofoneingangssprachsignals (C) mit einer durch den ersten Lautsprecherausgangssignalleistungsschätzabschnitt (43) geschätzten Signalleistung des Lautsprecherausgangssprachsignals (B), um ein Verhältnis dazwischen zu erhalten; und
eine zweite Abschwächungsgradberechnungseinrichtung (40) zum Berechnen eines Abschwächungsgrads in der sendeseitigen Abschwächungseinrichtung (2) basierend auf dem vom zweiten Vergleicher (41) ausgegebenen Verhältnis.

2. System nach Anspruch 1, **dadurch gekennzeichnet, dass** das dem empfangsseitigen Signalleistungsschätzabschnitt (32) zugeführte Empfangssprachsignal (A) in der Anfangsphase stumm ist, wenn das Sendesprachsignal (D) dem sendeseitigen Signalverzögerungspuffer (34) zugeführt wird.

3. System nach Anspruch 1 oder 2, **dadurch gekennzeichnet, dass** das dem Mikrofoneingangssignalleistungsschätzabschnitt (42) zugeführte Mikrofoneingangssprachsignal (C) in der Anfangsphase stumm ist, wenn das Lautsprecherausgangssignal (B) dem Lautsprecherausgangssignalverzögerungspuffer (44) zugeführt wird.

4. System nach Anspruch 1, 2 oder 3,
**dadurch gekennzeichnet, dass** die sendeseitige Steuereinrichtung (3b) ferner aufweist:
einen Restechosignalleistungsschätzabschnitt (52) zum Schätzen einer Signalleistung eines Restechosignals (G), das erhalten wird, wenn das Mikrofoneingangssprachsignal (C) den akustischen Echounterdrücker (6) durchläuft;
einen zweiten Lautsprecherausgangssignalleistungsschätzabschnitt (53) zum Schätzen einer Signalleistung des den akustischen Echounterdrücker (6) durchlaufenden Lautsprecherausgangssprachsignals (B);
einen dritten Vergleicher (51) zum Vergleichen einer durch den Restechosignalleistungsschätzabschnitt (52) geschätzten Signalleistung des Restechosignals (G) mit einer durch den zweiten Lautsprecherausgangssignalleistungsschätzabschnitt (53) geschätzten Signalleistung des Lautsprecherausgangssprachsignals (B), um ein Verhältnis dazwischen zu erhalten; und
eine dritten Abschwächungsgradberechnungseinrichtung (50) zum Berechnen eines Abschwächungsgrads in der sendeseitigen Abschwächungseinrichtung (2) basierend auf dem vom dritten Vergleicher (51) ausgegebenen Verhältnis.

5. System nach Anspruch 4,
**dadurch gekennzeichnet,**
**dass** der akustische Echounterdrücker (6) dazu geeignet ist, einen in einem Filterkoeffizientenpuffer (64) des adaptiven Filters gespeicherten Filterkoeffizient eines adaptiven Filters unter Verwendung des Restechosignals (G) und eines Wertes eines Tap-Eingangssignalpuffers (62) des adaptiven Filters sequenziell zu aktualisieren, wobei das Restechosignal (G) von einem Subtrahierer (65) ausgegeben wird, dem das Mikrofoneingangssprachsignal (C) zugeführt wird; und
**dass** eine Summe von Produkten zwischen dem adaptiven Filterkoeffizient des Filterkoeffizientenpuffers (64) des adaptiven Filters und dem Wert des Tap-Eingangssignalpuffers (62) des adaptiven Filters in einer Produktsummenberechnungseinrichtung (63) berechnet wird, wobei das Rechenergebnis durch den Subtrahierer (65) vom Mikrofoneingangssprachsignal (C) subtrahiert wird, um das Restechosignal (G) auszugeben.

## Revendications

1. Système de commutation vocale comprenant :
des moyens d'atténuation du côté émission (2) pour atténuer un signal vocal d'entrée de microphone (C) ayant un premier niveau pour produire un signal vocal d'émission (D) ayant un deuxième niveau ;
des moyens d'atténuation du côté réception (1) pour atténuer un signal vocal de réception (A) ayant un troisième niveau pour produire un signal vocal de sortie de haut-parleur (B) ayant un quatrième niveau ;
des moyens de contrôle du côté émission (3b) pour comparer ledit premier niveau dudit signal vocal d'entrée de microphone (C) au dit quatrième niveau dudit signal vocal de sortie de haut-parleur (B) pour obtenir une différence primaire entre ceux-ci, lesdits moyens de contrôle du côté émission (3b) étant adaptés pour contrôler, en fonction de ladite différence primaire, une quantité d'atténuation dudit signal vocal d'entrée de microphone (C) dans lesdits moyens d'atténuation du côté émission (2) ; et
des moyens de contrôle du côté réception (3a) pour comparer ledit deuxième niveau dudit signal vocal de transmission (D) au dit troisième niveau dudit signal vocal de réception (A) pour obtenir une différence secondaire entre ceux-ci, lesdits moyens de contrôle du côté réception (3a) étant adaptés pour contrôler, en fonction de ladite différence secondaire, une quantité d'atténuation dudit signal vocal de réception (A) dans lesdits moyens d'atténuation du côté réception (1),
**caractérisé en ce que** lesdits moyens de contrôle du côté réception (3a) comprennent en outre :
- un tampon de retard de signal sur le côté émission (34) pour fournir ledit signal vocal d'émission (D) avec un temps de retard, ledit temps de retard correspondant à un temps pendant lequel ledit signal vocal d'émission (D) revient en tant que dit signal vocal de réception (A) à travers une ligne de communication ;
une section d'estimation de puissance de signal du côté d'émission (33) pour estimer une puissance de signal dudit signal vocal d'émission (D) délivré par ledit tampon de retard de signal du côté émission (34) ;
une section d'estimation de puissance de signal du côté réception (32) pour estimer une puissance de signal dudit signal vocal de réception (A) ;
un premier comparateur (31) pour comparer une puissance de signal estimée primaire dudit signal vocal d'émission (D) estimée par ladite section d'estimation de puissance de signal du côté émission (33) à une puissance de signal estimée secondaire dudit signal vocal de réception (A) estimée par ladite section d'estimation de puissance de signal du côté réception (32) pour obtenir un rapport entre celles-ci ; et
un premier moyen de calcul de quantité d'atténuation (30) pour calculer une quantité d'atténuation dans lesdits moyens d'atténuation du côté réception (1) sur la base dudit rapport délivré par ledit premier comparateur (31) ; et
**en ce que** lesdits moyens de contrôle du côté d'émission (3b) comprennent en outre :
une section d'estimation de puissance d'entrée de microphone (42) pour estimer une puissance de signal dudit signal vocal d'entrée de microphone (C) ;
un tampon de retard de signal de sortie de haut-parleur (44) pour fournir ledit signal vocal de sortie de haut-parleur (B) avec un temps de retard, ledit temps de retard correspondant à un temps pendant lequel une voix délivrée par ledit haut-parleur (4) devient ledit signal vocal d'entrée de microphone (C) par un couplage acoustique avec ledit microphone (5) ;
une première section d'estimation de puissance de sortie de haut-parleur (43) pour estimer une puissance de signal dudit signal vocal de sortie de haut-parleur (B) délivré par ledit tampon de retard de signal de sortie de haut-parleur (44) ;
un deuxième comparateur (41) pour comparer une puissance de signal estimée dudit signal vocal d'entrée de microphone (C) estimée par ladite section d'estimation de puissance d'entrée de microphone (42) à une puissance de signal estimée dudit signal vocal de sortie de haut-parleur (B) estimée par ladite première section d'estimation de puissance de sortie de haut-parleur (43) pour obtenir un rapport entre celles-ci ; et
un deuxième moyen de calcul de quantité d'atténuation (40) pour calculer une quantité d'atténuation dans lesdits moyens d'atténuation du côté émission (2) sur la base dudit rapport délivré par ledit deuxième comparateur (41).

2. Système de commutation vocale selon la revendication 1, **caractérisé en ce que** ledit signal vocal de réception (A) entré dans ladite section d'estimation de puissance de signal du côté réception (32) est silencieux au moment initial auquel ledit signal vocal d'émission (D) est entré dans ledit tampon de retard de signal du côté émission (34).

3. Système de commutation vocale selon la revendication 1 ou 2, **caractérisé en ce que** ledit signal vocal d'entrée de microphone (C) entré dans ladite section d'estimation de puissance d'entrée de microphone (42) est silencieux au moment initial auquel ledit signal vocal de sortie de haut-parleur (B) est entré dans ledit tampon de retard de signal de sortie de haut-parleur (44).

4. Système selon la revendication 1, 2 ou 3, **caractérisé en ce que** lesdits moyens de contrôle du côté émission (3b) comprennent en outre :
une section d'estimation de puissance d'écho résiduel (52) pour estimer une puissance de signal d'un signal d'écho résiduel (G) obtenue par ledit signal vocal d'entrée de microphone (C) en traversant un annulateur d'écho acoustique (6) ;
une deuxième section d'estimation de puissance de sortie de haut-parleur (53) pour estimer une puissance de signal dudit signal vocal de sortie de haut-parleur (B) traversant ledit annulateur d'écho acoustique (6) ;
un troisième comparateur (51) pour comparer une puissance de signal estimée dudit signal d'écho résiduel (G) estimée par ladite section d'estimation de puissance d'écho résiduel (52) à une puissance de signal estimée dudit signal vocal de sortie de haut-parleur (B) estimée par ladite deuxième section d'estimation de puissance de sortie de haut-parleur (53) pour obtenir un rapport entre celles-ci ; et
un troisième moyen de calcul de quantité d'atténuation (50) pour calculer une quantité d'atténuation dans lesdits moyens d'atténuation du côté émission (2) sur la base dudit rapport délivré par ledit troisième comparateur (51).

5. Système de commutation vocale selon la revendication 4, **caractérisé en ce que** ledit annulateur d'écho acoustique (6) est adapté pour renouveler séquentiellement un coefficient de filtre adaptatif stocké dans un tampon de coefficient de filtre adaptatif (64) par l'utilisation dudit signal d'écho résiduel (G) et une valeur d'un tampon d'entrée de prise de filtre adaptatif (62), ledit signal d'écho résiduel (G) étant délivré par un soustracteur (65) dans lequel ledit signal vocal d'entrée de microphone (C) est entré, et **en ce qu'**une somme de produits entre ledit coefficient de filtre adaptatif dudit tampon de coefficient de filtre adaptatif (64) et ladite valeur dudit tampon d'entrée de prise de filtre adaptatif (62) est calculée dans une somme d'opérateur de produits (63), un résultat du calcul étant soustrait par ledit soustracteur (65) au dit signal vocal d'entrée de microphone (C), ledit signal d'écho résiduel (G) étant ainsi délivré.
